**Europäisches Patentamt**

**European Patent Office**

**Office européen des brevets**

(19)

(11) Veröffentlichungsnummer: **0 012 997**

**B1**

(12) **EUROPÄISCHE PATENTSCHRIFT**

(45) Veröffentlichungstag der Patentschrift: **22.06.83**

(21) Anmeldenummer: **79105275.6**

(22) Anmeldetag: **19.12.79**

(51) Int. Cl.³: **A 01 B 3/42**

(54) **Drehpflug.**

(30) Priorität: **19.12.78 DE 7837595 U**

(43) Veröffentlichungstag der Anmeldung:
**09.07.80 Patentblatt 80/14**

(45) Bekanntmachung des Hinweises auf die Patenterteilung:
**22.06.83 Patentblatt 83/25**

(84) Benannte Vertragsstaaten:
**DE FR**

(56) Entgegenhaltungen:
**DE - A - 2 360 739**
**DE - A - 2 413 331**
**DE - B - 1 038 323**
**FR - A - 1 016 642**
**US - A - 2 714 345**

(73) Patentinhaber: **Johann Gassner K.G.**
**Post Grosshelfendorf**
**D-8011 Göggenhofen (DE)**

(72) Erfinder: **Gassner jun., Johann**
**Haus Nr. 10**
**D-8011 Göggenhofen (DE)**

(74) Vertreter: **Lamprecht, Helmut, Dipl.-Ing.**
**Corneliusstrasse 42**
**D-8000 München 5 (DE)**

Courier Press, Leamington Spa, England.

EP 0 012 997 B1

Drehpflug

Die Erfindung betrifft einen Drehpflug mit einem die Pflugkörper tragenden Pflugrahmen, der mit einem vorderen Drehlager auf einem fest mit einem Pflugkopf verbundenen Tragrohr um eine etwa in Arbeitsrichtung im wesentlichen horizontal verlaufende Drehachse drehbar gelagert und in einer die Drehachse enthaltenden, in Arbeitsstellung etwa horizontalen Ebene gegenüber der Drehachse winkelverstellbar ist, wobei in einer die Drehachse enthaltenden vertikalen Ebene außerhalb der Drehachse ein Stützpunkt am Tragrohr angebracht ist, mit dem gelenkig das eine Ende eines Lenkers verbunden ist, dessen anderes Ende in der horizontalen Ebene außerhalb der Drehachse an dem beim Drehvorgang unterhalb der Drehachse hindurchwandernden Rahmenbereich angelenkt ist.

Aufgabe des Lenkers ist es, zwangsläufig während des Drehvorgangs den Pflugrahmen derart in seiner Winkelstellung gegenüber der Drehachse zu verstellen, daß das hintere Ende des Pfluges während des Drehvorgangs eine ausreichende Bodenfreiheit einhält. Außerdem kann durch Veränderung der Länge des Lenkers die Schnittbreite des Pfluges eingestellt werden.

Bei einer aus der DE—A1—24 13 331 bekannten Pflugkonstruktion der eingangs erwähnten Art ist der Pflugrahmen kastenförmig ausgebildet und nahe seinem vorderen Ende um eine in Arbeitsstellung vertikale Achse verschwenkbar auf einer hülsenförmigen Wendewelle gelagert, die ihrerseits drehbar auf dem Tragrohr gelagert ist, das selbst nur auf eine relativ geringe Länge in den kastenförmigen Pflugrahmen eindringt. Am hinteren Ende des Tragrohrs ist ein vertikal nach oben ragender Exzenter ausgebildet, an dessen freiem Ende ein längenveränderlich einstellbarer Lenker angreift, dessen anderes Ende gegenüber dem Exzenter in Fahrtrichtung nach hinten versetzt am Pflugrahmen angeschlossen ist.

Da die vertikale Achse auf der Wendewelle vor dem Exzenter angeordnet ist, muß das vom Exzenter abgewandte Ende des Lenkers an einem Teil der Pflugrahmens angebracht sein, welcher bei nach oben ragendem Exzenter unter der Drehachse des Pflugrahmens hindurchwandert, während für den Fall, daß der Exzenter nach unten ragt, der Teil des Pflugrahmens, an welchem der Lenker angreift, über diese Drehachse hinwegwandern muß.

Bei der bekannten Konstruktion ist der Exzenter starr und nicht verstellbar mit dem Tragrohr verbunden.

Die bekannte Konstruktion ist relativ kompliziert aufgebaut und durch die Anordnung des Lenkers innerhalb des kastenförmigen Pflugrahmens ist der Lenker nur schwer für eine Schnittbreitenverstellung zugänglich. Die Anordnung eignet sich kaum dazu, einen Pflug nachträglich mit relativ geringem Aufwand mit einem die Bodenfreiheit beim Drehvorgang verbessernden Lenker zu versehen, wie dies insbesondere bei Drehpflügen erwünscht sein kann, deren Scharzahl durch Anbauelemente veränderbar, insbesondere vergrößerbar ist, weil mit zunehmender Scharzahl die Gefahr wächst, daß das hintere Pflugende beim Drehvorgang auf dem Boden aufsitzt. Da bei der bekannten Konstruktion der Pflugrahmen nur in seinem dem Pflugkopf unmittelbar benachbarten Bereich einerseits auf der erwähnten vertikalen Achse und andererseits über den Lenker abgestützt auf dem Tragrohr gelagert ist, ergeben sich mit zunehmender Scharzahl und damit zunehmender Pfluglänge hohe Kräfte, welche über den Lenker abgestützt werden müssen, so daß dieser sehr stabil und damit aufwendig konstruiert sein muß.

Der Erfindung liegt die Aufgabe zugrunde, einen Drehpflug der eingangs erwähnten Art so auszugestalten, daß sich insgesamt eine sehr einfache Konstruktion ergibt, die sich insbesondere auch zum nachträglichen Einbau eignet und bei welcher der Lenker so weit wie möglich entlastet werden kann. Außerdem soll der Lenker nicht nur zur Schnittbreitenverstellung geeignet sein, sondern es soll auch die Möglichkeit vorgesehen sein, durch Fertigungsungenauigkeiten sich ergebende Abweichungen des Schnitts in den beiden verschiedenen Arbeitsrichtungen zu korrigieren.

Die Lösung dieser Aufgabe besteht darin, daß das vordere Drehlager quer zur Drehachse im Pflugrahmen beweglich gelagert ist, daß der Pflugrahmen zusätzlich durch ein hinteres Drehlager im Bereich des hinteren Endes des Tragrohrs auf dem Tragrohr gelagert ist, daß der Stützpunkt sich unterhalb der Drehachse befindet und an einem mittels einer Klemmeinrichtung lösbar auf dem Tragrohr festgelegten, nach dem Lösen der Klemmeinrichtung auf dem Tragrohr um die Drehachse beweglichen Element angeordnet ist.

Bei dieser Konstruktion ist der Pflugrahmen auch ohne den Lenker einwandfrei drehbar auf dem Tragrohr gelagert und betriebsfähig, sofern die Bodenfreiheit während des Drehvorgangs ausreichend ist. Der Lenker kann verhältnismäßig leicht nachträglich eingebaut werden, wenn sich die Bodenfreiheit des Pfluges als nicht ausreichend herausstellt. Ungleicher Schnitt in den beiden Arbeitsrichtungen kann dadurch korrigiert werden, daß das den Stützpunkt aufweisende Element im einen oder anderen Drehsinn etwas um die Drehachse verstellt wird.

Eine vorteilhafte Ausgestaltung der Neuerung besteht darin, daß das den Stützpunkt aufweisende Element als das Tragrohr umschließende, auf dem Tragrohr festklemmbare Rohrschelle ausgebildet ist.

Eine andere vorteilhafte Ausgestaltung ist es, daß in an sich bekannter Weise der Lenker längenverstellbar ist.

Anhand der nun folgenden Beschreibung eines in der Zeichnung dargestellten Ausführungsbeispiels der Neuerung wird diese näher erläutert.

Es zeigt:

Fig. 1 eine schematische Draufsicht auf einen gemäß der Neuerung ausgebildeten Drehpflug und

Fig. 2 einen Schnitt nach der Linie II—II in Fig. 1.

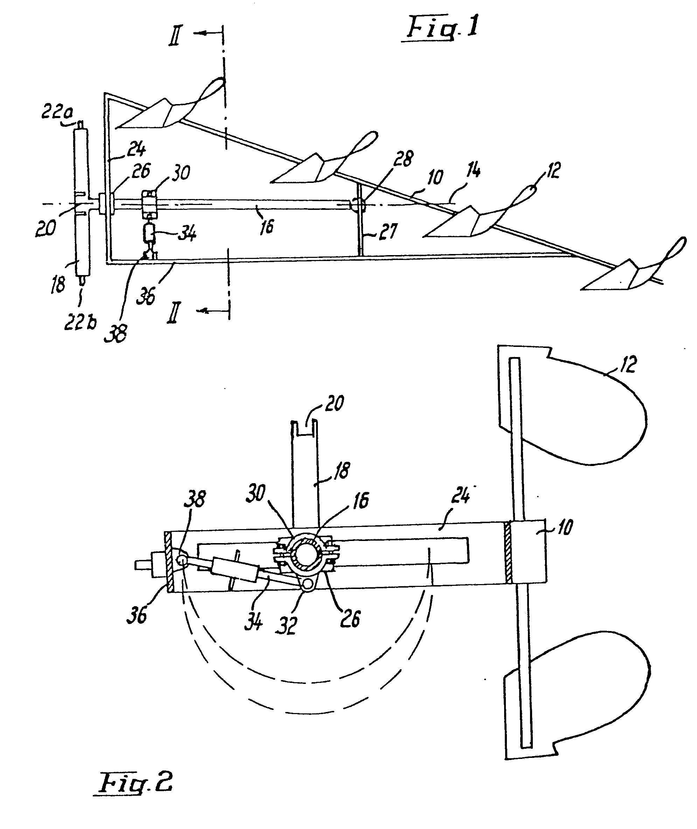

In Fig. 1 bezeichnet 10 den Rahmen eines Drehpflugs, der mit einer Anzahl von Pflugkörpern 12 versehen ist, die jeweils paarweise den beiden Arbeitsrichtungen des Drehpflugs zugeordnet sind. Der Rahmen 10 ist drehbar um die in Fahrtrichtung verlaufende Drehachse 14 auf einem Tragrohr 16 gelagert, das fest mit einem Pflugkopf 18 verbunden ist, der seinerseits Anschlußpunkte 20, 22a und 22b für eine übliche Dreipunktanlenkung aufweist.

Zur Lagerung des Pflugrahmens ist dieser an seinem vorderen, durch einen Quersteg 24 gebildeten Ende mit einem vorderen Drehlager 26 versehen, das längs des Querstegs 24 verstellbar ist, sowie mit einem hinteren, von einem Quersteg 27 getragenen Drehlager 28, durch welches der Rahmen 10 auf das hintere Ende des weit in den Rahmen 10 ragenden Tragrohrs 16 abgestützt wird. Die Lager 26 und 28 sind so ausgebildet, daß eine Winkelverstellung des Rahmens 10 in Bezug auf die Drehachse 14 möglich ist.

Nahe dem vorderen Drehlager 26 ist auf das Tragrohr 16 ein rohrschellenartiges Element 30 aufgeklemmt, das durch ein parallel zur Drehachse 14 angeordnetes, exzentrisches Lagerauge 32 einen Stützpunkt für einen längenveränderlichen Lenker 34 bildet, der im Normalfall vertikal unterhalb der Drehachse 14 angeordnet ist.

An dem von den Pflugkörpern 12 abgewandten Seitenbereich 36 des Pflugrahmens 10 ist ein weiteres Lagerauge 38 angebracht, z.B. angeschweißt, mit welchem das andere Ende des Lenkers 34 verbunden ist.

Durch Längenveränderung des Lenkers 34 wird sich der Pflugrahmen 10 um das hintere Drehlager 28 verschwenken, wodurch sich die Schnittbreite des Pfluges verändert. Zeigt sich, daß die Schnittbreite in beiden Arbeitsrichtungen unterschiedlich ist, kann das Element 30 auf dem Tragrohr 16 gelöst, zur Korrektur etwas verschwenkt und dann erneut festgeklemmt werden. Dadurch wird die Schnittbreite in der einen Arbeitsrichtung im gleichen Maß vergrößert, in welchem sie in der anderen Arbeitsrichtung verkleinert wird.

Wird der Pflugrahmen um die Drehachse 14 gedreht, beschreibt der Anlenkpunkt des Lenkers 34 am Lagerauge 38 einen zur Drehachse 14 exzentrischen Bogen, welcher — weil die Pflugkörper 12 über die Drehachse 14 hinwegbewegt werden — unter der Drehachse hindurchgeführt und an seinem tiefsten Punkt einen Abstand von der Drehachse 14 aufweist, der gegenüber dem Abstand in der Arbeitsstellung (Fig. 2) um die Exzentrizität des Stützpunkts 32 vergrößert ist. Dadurch wird der vordere Bereich des Pflugrahmens 10 während der ersten Hälfte der Drehbewegung zunehmend nach unten gedrückt, wobei sich das vordere Lager 26 gegenüber dem Steg 24 verstellt und wodurch das hintere Pflugrahmenende aufgrund einer gegenläufigen Bewegung um das hintere Drehlager 28 relativ zur Drehachse 14 angehoben wird, wodurch sich die Bodenfreiheit an dieser besonders kritischen Stelle verbessert.

Nach dem Durchlaufen des Bereichs unterhalb der Drehachse 14 verringert sich die Abweichung des Abstandes des Lagerauges 38 von der Drehachse 14 von dem in der Arbeitsstellung eingenommenen Abstand wieder, bis der Abstand in der neuen Arbeitsstellung im wesentlichen wieder dem Abstand in der vorherigen Arbeitsstellung entspricht, wobei Abweichungen nur durch die vorstehend beschriebene Korrektur der Schnittbreite in beiden Fahrtrichtungen bedingt sind.

**Patentansprüche**

1. Drehpflug mit einem die Pflugkörper (12) tragenden Pflugrahmen (10), der mit einem vorderen Drehlager (26) auf einem fest mit einem Pflugkopf (18) verbundenen Tragrohr (16) um eine etwa in Arbeitsrichtung im wesentlichen horizontal verlaufende Drehachse (14) drehbar gelagert und in einer die Drehachse (14) enthaltenden, in Arbeitsstellung etwa horizontalen Ebene gegenüber der Drehachse (14) winkelverstellbar ist, wobei in einer die Drehachse (14) enthaltenden vertikalen Ebene außerhalb der Drehachse (14) ein Stützpunkt (32) am Tragrohr (16) angebracht ist, mit dem gelenkig das eine Ende eines Lenkers (34) verbunden ist, dessen anderes Ende in der horizontalen Ebene außerhalb der Drehachse (14) an dem beim Drehvorgang unterhalb der Drehachse (14) hindurchwandernden Rahmenbereich (36) angelenkt ist, dadurch gekennzeichnet, daß das vordere Drehlager (26) quer zur Drehachse (14) im Pflugrahmen (10) beweglich gelagert ist, daß der Pflugrahmen (10) zusätzlich durch ein hinteres Drehlager (28) im Bereich des hinteren Endes des Tragrohrs (16) auf dem Tragrohr (16) gelagert ist, daß der Stützpunkt (32) sich unterhalb der Drehachse (14) befindet und an einem mittels einer Klemmeinrichtung lösbar auf dem Tragrohr (16) festgelegten, nach dem Lösen der Klemmeinrichtung auf dem Tragrohr (16) um die Drehachse (14) beweglichen Element (30) angeordnet ist.

2. Drehpflug nach Anspruch 1, dadurch gekennzeichnet, daß das den Stützpunkt (32) aufweisende Element (30) als das Tragrohr (16) umschließende, auf dem Tragrohr (16) fest-

5 **0 012 997** 6

klemmbare Rohrschelle ausgebildet ist.

3. Drehpflug nach Anspruch 1 oder 2, dadurch gekennzeichnet, daß der Lenker (34) längenverstellbar ist.

## Revendications

1. Charrue Brabant comportant un châssis (10) portant les socs (12), qui est monté à rotation autour d'un axe (14) s'étendant sensiblement horizontalement dans la direction de travail et ce par l'intermédiaire d'un palier antérieur (26) tournant sur un tube support (16) solidaire d'un tête de charrue (18), et qui peut être réglé angulairement par rapport à l'axe de rotation (14), en position de travail, dans un plan sensiblement horizontal contenant l'axe de rotation (14), le tube support (16) portant un point de liaison (32), situé dans un plan vertical contenant l'axe de rotation (14), à distance de cet axe de rotation (14), point de liaison sur lequel est articulée une extrémité d'un bras (34) dont l'autre extrémité est articulée, dans le plan horizontal à distance de l'axe de rotation (14), sur la zone (36) du châssis qui est déplacée en dessous de l'axe de rotation (14), lors de l'opération de rotation, caractérisé en ce que le palier de rotation antérieur (26) est monté mobile, dans le châssis porte-socs (10), perpendiculairement à l'axe de rotation (14), en ce que le châssis porte-socs (10) est monté additionnellement à rotation sur le tube support (16), par l'intermédiaire d'un palier postérieur (28) situé dans la zone de l'extrémité postérieure du tube support (16), en ce que le point de liaison (32) est situé en dessous de l'axe de rotation (14) et en ce qu'il est disposé sur un élément (30) fixé d'une manière amovible, au moyen d'un dispositif de blocage, sur le tube support (16) et pouvant être déplacé sur ce tube support (16), autour de l'axe de rotation (14), après libération du dispositif de blocage.

2. Charrue Brabant suivant la revendication 1 caractérisée en ce que l'élément (30) portant le point de liaison (32) est réalisé sous la forme d'une coquille tubulaire entourant le tube support (16) et pouvant être bloquée fermement sur celui-ci.

3. Charrue Brabant suivant l'une quelconque des revendications 1 et 2 caractérisée en ce que le bras (34) est réglable en longeur.

## Claims

1. A reversible plough comprising a mounting frame (10) carrying the shares (12), the mounting frame (10) being mounted by means of a front pivot bearing (26) on a tube-shaped frame supporting beam (16) rigidly connected with a front end frame (18), for rotation around an axis (14) extending approximately in the direction of operation of the plough and substantially in a horizontal direction and for angular adjustment relative to said axis (14) within a plane including said axis (14) and arranged approximately horizontal when the plough is in its operative position, a supporting point (32) being arranged on said frame supporting beam outside said axis (14) and in a vertical plane including said axis (14), one end of an arm (34) being pivotably connected with said supporting point (32) and the other end of said arm (34) being pivotably connected outside said axis (14) with a portion (36) of said mounting frame (10) which during the reversing rotation of said mounting frame (10) is swung under said axis (14), characterized in that the front pivot bearing (26) is mounted on said mounting frame (10) for movement transverse to said axis (14), that said mounting frame (10) is additionally mounted on the rear portion of said frame supporting beam (16) by means of a rear pivot bearing (28), that said supporting point (32) is situated under said axis (14) and on an element (30) which is disengageably clamped on said frame supporting beam (16) by means of a clamping device and which after having loosened said clamping device is apt to be moved on said frame supporting beam (16) around said axis (14).

2. A plough as claimed in claim 1, characterized in that the element (30) comprising said supporting point (32) is formed as a collar band encircling said frame supporting beam (16) and apt to be clamped to said frame supporting beam (16).

3. A plough as claimed in claim 1 or 2, characterized in that the length of said arm (34) is adjustable.

4

0012997

*Fig.1*

*Fig.2*